(19) **Europäisches Patentamt**

**European Patent Office**

**Office européen des brevets**

(11) **EP 0 921 646 B1**

(12) **EUROPEAN PATENT SPECIFICATION**

(45) Date of publication and mention
of the grant of the patent:
**08.06.2005 Bulletin 2005/23**

(51) Int Cl.⁷: **H04B 7/08**, H04L 27/26,
H04L 1/06

(21) Application number: **98309904.5**

(22) Date of filing: **03.12.1998**

(54) **Digital radio communication system with diversity reception**

Digitales Funkkommunikationssystem mit Diversity-Empfang

Système de radiocommunication numérique avec de la réception en diversité

(84) Designated Contracting States:
**DE ES FR IT**

(30) Priority: **05.12.1997 GB 9725890**

(43) Date of publication of application:
**09.06.1999 Bulletin 1999/23**

(73) Proprietor: **BRITISH BROADCASTING
CORPORATION
London W1A 1AA (GB)**

(72) Inventors:
• **Zubrzycki, John Thomas, Dr.
Croydon, Surrey CR0 2HX (GB)**
• **Evans, Richard Harold
Tadworth, Surrey KT20 6RY (GB)**

(74) Representative: **Robson, Aidan John
Reddie & Grose
16 Theobalds Road
London WC1X 8PL (GB)**

(56) References cited:
**EP-A- 0 863 620**          **WO-A-96/08088**

• **PLATTNER A ET AL: "INDOOR AND OUTDOOR
PROPAGATION MEASUREMENTS AT 5 AND 60
GHZ FOR RADIO LAN APPLICATION" IEEE MTS
INTERNATIONAL MICROWAVE SYMPOSIUM
DIGEST,US,NEW YORK, IEEE, vol. -, 1993, pages
853-856, XP000630543**
• **CIMINI L.; SOLLENBERGER N.: 'OFDM and
diversity and coding for advanced cellular
internet services' GLOBAL
TELECOMMUNICATIONS CONFERENCE 1997
03 November 1997, NEW YORK, USA, pages 305
- 309, XP010254572**

**Description**

This invention relates to a multiple carriers digital radio communication system using diversity in reception and, in particular, to such a system for use with a digital radio camera.

Analogue radio cameras are well known. These are of several types. One example is a diversity reception system in which a single transmit antenna is provided on a camera and a plurality of receiving antennas are provided around the area in which the camera operates. Each receiving antenna repeatedly monitors the strength and quality of the signal received from the radio camera and, in dependence on this information, selects which receiving antenna to use for subsequent reception of signals from the camera.

Another type of system was proposed in our British Patent No. GB-B-2196211. In this, a plurality of directional antennas are provided on the radio camera and a single receive antenna is provided. During the field blanking intervals of a video signal a known signal is transmitted by each of the camera antennas in turn. At the receiver antenna, circuitry is provided to determine which transmit antenna gave the best signal in terms of strength and quality and a selection signal is sent back over a VHF link to the radio camera which then selects the appropriate antenna for transmission of the next field of video data.

The purpose of developing a digital radio camera is to provide a reliable system that is compatible with digital television production. However, simply replacing analogue modulation with digital does not necessarily provide the required degree of reliability. It is preferable for a system to be used with a simple omnidirectional antenna on a camera combined with a number of receiving antennas placed around the area of interest.

Conventional digital diversity systems rely on complex receivers at each antenna to process the signal to help decide which antenna has the best reception. These systems tend to be prohibitably expensive.

The article "OFDM with diversity and coding for advanced cellular internet services" from L. J. Cimini and N. R. Sollenberger proposes a diversity receiver for OFDM using also part of receivers at each antenna before summing the signals from these antennas.

Preferred embodiments of the present invention seek to provide a system for use with simple receivers in order to minimise cost and to simplify operational use. In particular, a preferred embodiment provides a diversity reception system using multi-antenna summation to provide a signal.

The invention is defined in its various aspects in the appended claims to which reference should now be made.

A preferred embodiment of the invention will now be described in detail by way of example with reference to the accompanying drawings in which:

Figure 1 is a block diagram of a radio camera in a diversity reception system with signal summation;
Figure 2 is a graph of the COFDM signal generated at the mobile camera of Figure 1;
Figure 3 is a graph showing the summed output of the adder in Figure 1 for a small delay between the signals received at the two antennas;
Figure 4 is equivalent to Figure 3 but is a result of including a longer delay between the signals on the two antennas;
Figure 5 is a block diagram of an embodiment of the invention;
Figure 6 is a block diagram of a second embodiment of the invention; and
Figure 7 shows a system where a third antenna is required to avoid flat fading of the signal.

A system called Coded Orthogonal Frequency Division Multiplexing (COFDM) has been developed for Digital Audio Broadcasting (DAB) and Digital Terrestrial Television. The bits of each digital sample are distributed over a number of spaced carriers at a number of different time intervals. The Fast Fourier Transform (FFT) of the carriers at each time interval is taken. Each FFT comprises what is known as a symbol and a plurality of these are combined into a COFDM frame. The frames are then transmitted.

The distributing of bits of data in frequency and in time gives a system which is very error resistant and can cope with a high degree of multipath distortion.

Such a system is usually used as a single frequency network with a plurality of transmitters sending out synchronised frames of data. Any multipath propagation delays in such a system will tend to be long and, as a result, any fading notches in the received signal will usually be narrow in relation to the bandwidth occupied by the complete set of carriers. Thus, only some of the carriers fade out and error correction coding can easily recover the wanted information.

We have appreciated that the single frequency approach can be used in reverse with a digital radio camera. All that would be needed would be to combine all the receiving antenna outputs to provide a signal to a single COFDM demodulator. This would thereby obtain the goal of having a plurality of low cost receiving sites with one complex decoder.

In the broadcasting application, the multipath propagation delays will tend to be long. As a result, any fading notches caused by multipath propagation delays will usually be narrow in relation to bandwidth of the COFDM carriers. Thus, only some of the carriers will fade out and error correction coding will be able to recover the information required.

The radio camera is likely to be used in situations, e.g., a football stadium, where the differential delays of the signal picked up at each receiving site are very small. This will cause the width of any fading notches to be large, and in some circumstances, all the carriers may be lost. For example, if the radio camera moved into a position almost exactly between two receiving antennas with cable feeds of equal length to the receiver decoder, almost all the carriers would be lost and no signal would be fed to the receiver decoder.

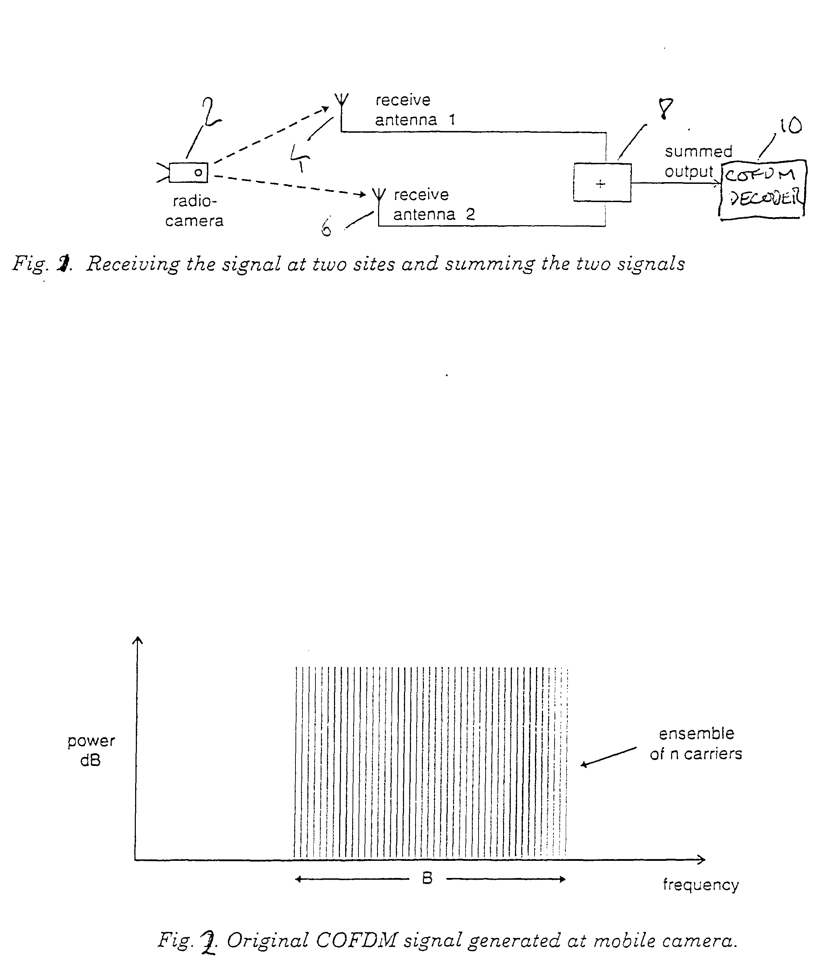

The type of fading which can occur is illustrated with reference to Figures 1, 2, 3 and 4. Figure 1 shows a radio camera 2 providing a COFDM signal to a pair of receive antennas 4 and 6. These in turn provide the received signals to an adder 8 which sends a summed output to a COFDM decoder.

The original COFDM ensemble of carriers generated at the radio camera is shown in Figure 2. As can be seen, all the carriers are of equal magnitude. Data is modulated onto these using a suitable modulation scheme, for example, quadrature phase shift-keying. It is of course the FFT of all these carriers which is transmitted by the camera.

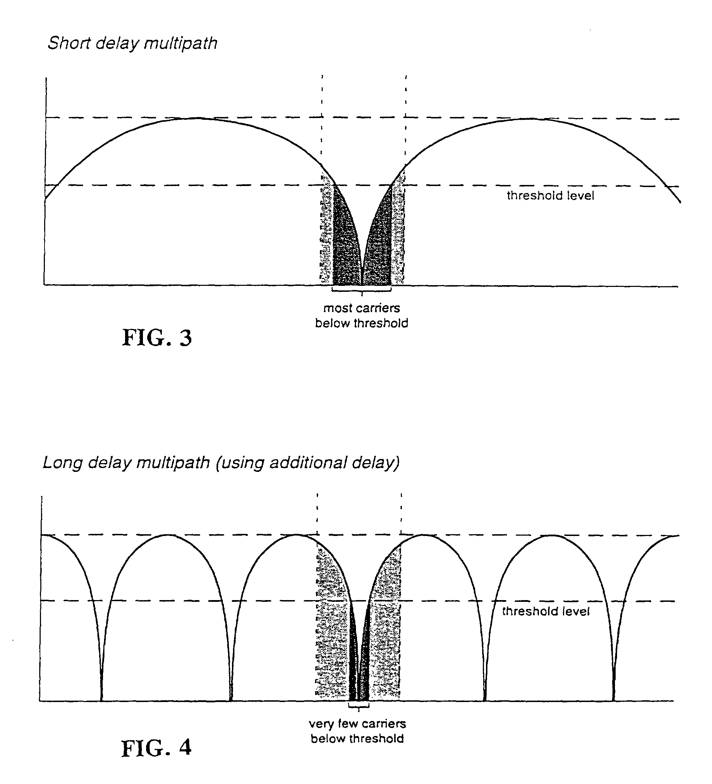

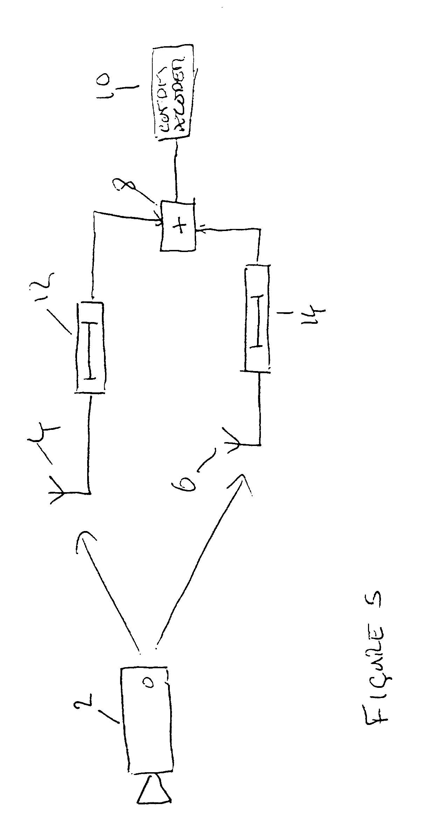

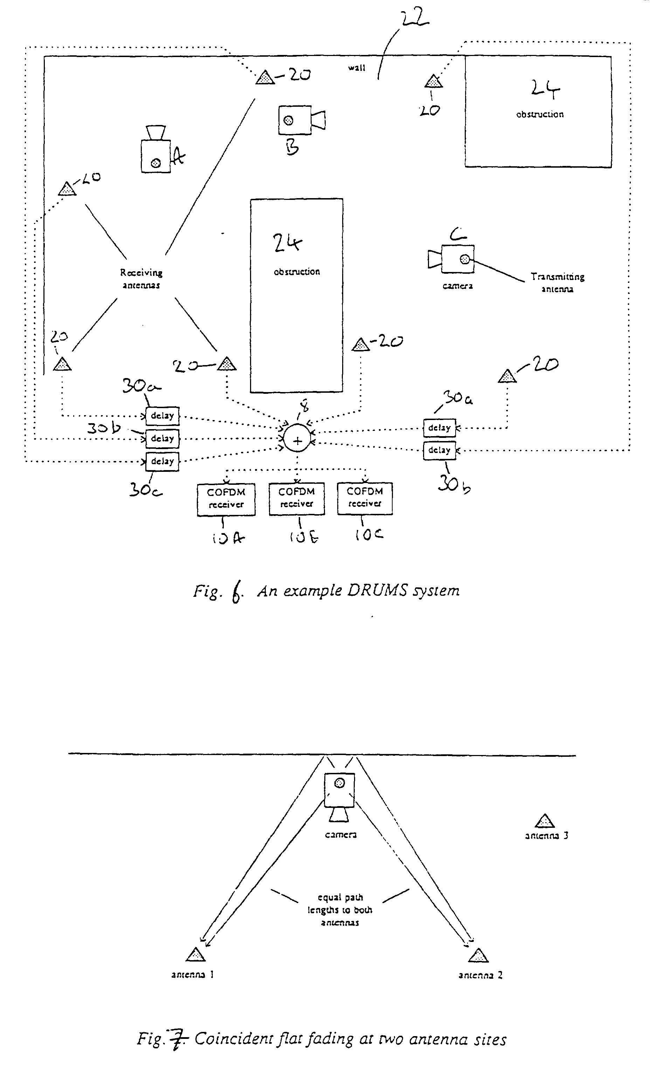

Figure 3 shows the power distribution of the carriers after a reverse FFT at the COFDM decoder 10. This representation is for a small delay between the two COFDM signals. As can be seen, a large notch in the centre of the ensemble of carriers has been generated thereby losing much of the data.

In Figure 4, the same output is shown but for two signals with a much larger delay between them. The notch generated by multipath propagation is considerably narrower than in Figure 3 and thus there is sufficient data to use conventional error correction techniques to regenerate data lost in the notch.

Although the interference notch has been drawn in the centre of the COFDM ensemble in Figures 3 and 4, it can in fact occur at any point. It should be noted that as the attenuation profile is periodic, when the ensemble has a broader bandwidth, more than one notch may occur. Furthermore, the frequency spacing between the notches reduces as the delay increases thereby bringing more notches into the ensemble. The strength of COFDM is its ability to handle many notches whilst still being able to recover the signal through the use of channel coding.

It will be appreciated that there is a maximum notch width $\Delta f$ that can be tolerated before too many carriers are lost.

The solution to the problem of wide notches being generated by digital radio cameras used in restricted environments is to add a static delay into each receiving antenna output. The value of the delay needs to be different for each antenna and large enough to ensure that the maximum notch width will never exceed a specified fraction of the bandwidth of the COFDM ensemble. The exact fraction will depend on the error correction technique, the number of antennas, and the statistical distribution of the notches. Figure 5 shows a radio camera system having a single camera and two receivers with delays included in accordance with an embodiment of the invention. As can be seen, delays 12 and 14 have been introduced in the feeds from antennas 4 and 6 to the adder 8 respectively. In practice, in a situation such as this only one delay needs to be introduced in one of the antenna feeds. However, providing delay in each feed gives a more versatile system where delays can be appropriately adjusted according to the environment in which the system is to be used.

At a complex location requiring many antennas, it is not necessary to give each antenna a unique delay. This is because the delays only need to be different for each area covered. Delay values can be re-used in different areas, providing the radio camera cannot transmit to two different antennas having the same delay as it moves from one area to the next. This avoids the problem of ending up with excessively large delays where a large number of antennas are used.

Such a system is illustrated in Figure 6. In this, a plurality of antennas 20 are provided in an area 22 bounded by a wall and having two obstructions 24. Three radio cameras are shown operating in this area and they are labelled A, B and C.

The receiving antennas 2C are all coupled to an adder 8 which provides output signals for three COFDM receivers 10, one for each radio camera.

Antennas which can not be seen by the same radio camera may have the same delay. Therefore, the two antennas 20 immediately adjacent obstruction 24 feed directly into the adder 8 with no delay. The other delays 30a, b and c are all different. However, it can be seen that two of the antennas 20 feed through a delay 30a. These again cannot be seen by one radio camera. Secondly, delays 30b cannot be seen by one radio camera. There is a final delay 30c connecting the final antenna 20 to the adder 8. The greatest delays would tend to be used in the most distant antennas to maximise effect.

An example of the technique will now be illustrated. In this example, it is assumed that a COFDM ensemble of 1,000 orthogonal carriers occupies a bandwidth of 20 MHz. This bandwidth is typical for current outside broadcast channels and will support nearly 100 Mbits per second using 64 QAM modulation (Quadrature Amplitude Modulation, a higher level of QPSK). If the error protection provided in the COFDM gives 100 percent redundancy in the signal, then the video bit rate could be nearly 50 Mbits per second. This could be sufficient to transmit very high quality MPEG2 coded signals, provided that the guard interval between COFDM symbols is not too large. It is assumed that if a carrier in the ensemble has a level 6 dB below the largest carrier, then it is not recoverable and requires error correction to recover the data.

The delay lengths required are calculated by first considering the combined power, P(f), of two interfering carriers with the same frequency that have traversed different paths:

$$P(f) = 1 + \cos\left(\frac{2\pi fl}{c}\right)$$

where:

    $c$ is velocity of light
    $f$ is frequency
    $l$ is path length difference in vacuum

From this, it can be seen that the width of a fading notch, $\Delta f$, in a COFDM ensemble where carriers are weaker than -6 dB with respect to maximum power is:

$$\Delta f = \frac{100}{l} \ MHz$$

If half-rate coding is used, then half the carriers can be in the notch (refers to proximation). If the COFDM ensemble is 20 MHz wide then $\Delta f$ will be 10 MHz which, from the above equation, gives $l$ = 10 m.

A 10 m delay is equivalent to a time period of 33 ns which is only a small fraction of a symbol period of 50 μs In practice, an extra delay equivalent to the physical separation between the antennas is required to ensure that the signals from the radio camera can still sum with the minimum permitted differential delay in any camera position. If an area, of say, 50 m by 50 m is covered by four antennas positioned around the edges, e. g., one at each corner of the square, then the differential delay line length should be about 60 m to maintain the minimum permitted delay. This is a maximum delay of 180 m for the fourth antenna. These distances are lengths for transmissions in vacuum and it is of course better to use delay time.

The delay required is short compared to video field synchronisation, which would still be corrected by a frame store synchroniser, as is usual with radio cameras. In DAB, an extra delay is deliberately introduced by time interleaving the data as a countermeasure against fading. Time interleaving can also be used in the radio camera system. However, the diversity reception arrangement is intended to continuously present sufficient carriers to the receiver through the delayed summation process.

The length of the required delays are too long to be implemented as cable delays as losses would be too high at the typical receive microwave frequencies. Down conversion of the receive signal at the antenna to lower the cable loss or for use with an SAW delay line could be arranged. An alternative is to up convert the signal to the infra-red band and use an optical fibre as both the delay element and the interconnection cable to the summing point.

The number of antennas covering an area and their location depends on the amount of multipath distortion present. Enough antennas are needed to avoid the problem of them all receiving a signal corrupted by short delay multipath. Figure 7 shows an example where symmetry has caused antennas 1 and 2 to be affected by flat fading. In such a case, a third antenna is needed in order to recover the signal.

Even with three antennas, positions could be found where all suffer from flat fading. However, the probability is reduced in comparison with a system of just two antennas. The spatial distribution is dependent upon operating frequency.

The automatic gain control strategy for the signals received from each antenna would benefit from some form of threshold detector to avoid antennas not receiving any signal contributing noise at the summing point.

In order to undo flat fading, two or more antennas need to be summed. Each subsequent antenna must have a delay that is an integer multiple of the first delay, to avoid the delays cancelling between any pair of antennas. Thus, the first antenna has no delay, the second antenna first minimum delay, the third twice the minimum delay, and the fourth three times the minimum delay. Thus, a fourth antenna system needs a maximum delay of 3 x 200, which is 600 ns. This is just over 1 percent of the symbol rate in this example and has little effect on the channel capacity.

Making the guard interval nearly 20 times longer, e.g., 10 μs between symbols would give a total symbol period of 60 μs. This would still allow channel capacity of 100 Mbits per second whilst increasing the allowable antenna separation to nearly 1 km. This would be useful for e.g., helicopter operation. There are various options for implementing the delays, e.g., down conversion, SAW delays, optical fibre delays, etc. It may be possible to down convert each antenna signal to produce very slightly different intermediate frequencies, thereby giving a continuously varying phase shift between them and sweeping any nulls across the pass band in the summed signal. This, combined with some limited time interleaving, may be of benefit.

At present, COFDM is limited to a gross bit rate of about 50 Mbits per second thereby suggesting a video bit rate of the order of 25 Mbits per second. However, the system does not have to be a full COFDM implementation. Other multicarrier or broad band techniques could be used. However, the application of VLSI techniques to COFDM may produce the compact circuitry required, possibly making it effective to obtain the required capacity by using two or more COFDM ensembles together.

**Claims**

**1.** A digital radio communication system comprising a mobile transmitter (2) transmitting error protected digital data on a plurality of radio carriers to a plurality of receiving antennas (4, 6) for receiving signals from the transmitter (2), the receiving antennas (4, 6) being placed around an area in which the transmitter (2) is to be used, and a summation means (8) in which signals received by the receiving antennas (4, 6) are combined to provide an output signal, and wherein the signal paths from each receiving antenna (4, 6) to the summation means (8) include delays (12,14) to reduce the effect of interference between signals received on two or more receiving antennas (4, 6), and a multicarrier receiver (10) coupled to the summation means (8) to receive the output signal and including an error protection decoder to decode the original digital data.

2. A digital radio communication system according to claim 1 in which there are two or more receiving antennas (4, 6) and all except one of the signal paths to the summation means (8) includes a delay means (12, 14) such that signals from the receiving antennas (4, 6) reach the summation means at different times.

3. A digital radio communication system according to claim 1 or claim 2 comprising at least three receiving antennas.

4. A digital radio communication system according to any preceding claim wherein at least two of the receiving antennas cannot simultaneously receive signals from the transmitters and the signal paths from these receiving antennas to the summation means are delayed by similar amounts.

5. A digital radio communication system according to any preceding claim in which the transmitter is adapted to a COFDM signal.

6. A digital radio communication system according to any preceding claim in which there are a plurality of transmitters each transmitting signals in different parts of the frequency band.

7. A digital radio communication system according to claim 1 in which the delay added to the signal received at each antenna has a minimum value equivalent to the maximum possible path difference between any two of the receiving antennas plus an extra delay.

8. A digital radio communication system according to claim 5 in which the maximum delay value used with one of the antennas is less than or equal to the guard interval of the COFDM signal being used.

9. A digital radio communication system according to claim 7 in which no extra delay is used with one of the antennas.

10. A digital radio communication system according to any preceding claim in which a connection means between the receiving antennas and the summation point is also adapted to perform the delay function.

11. A digital radio communication system according to any preceding claim in which further means are provided, so that the received signal at each receiving antenna is converted to a different radio frequency or to an intermediate frequency or to an optical frequency to implement the delay using the appropriate connection means so that the connection means is more compact or the signal attenuation is lower.

12. A method of operating a digital radio communication system comprising a mobile transmitter (2) for transmitting error protected digital data on a plurality of radio carriers and a plurality of receiving antennas (12, 14), the method comprising the step of transmitting digital signals from the transmitter (2), receiving the signals from the receiving antennas (12, 14), providing received signals to a summation means (8), delaying the signals between the receiving antennas (12, 14) and the summation means (8) such that the effects of interference between signals are reduced, providing an output signal from the summation means (8), receiving the output signal at a receiver and decoding the output signal to decode the original digital data.

**Patentansprüche**

1. Digitales Funkkommunikationssystem, umfassend einen mobilen Sender (2), der fehlergeschützte digitale Daten auf einer Mehrzahl von Funkträgern zu einer Mehrzahl von Empfangsantennen (4, 6) zum Empfangen von Signalen von dem Sender (2) sendet, wobei die Empfangsantennen (4, 6) um einen Bereich herum platziert sind, in dem der Sender (2) verwendet werden soll, und ein Summiermittel (8), in dem von den Empfangsantennen (4, 6) empfangene Signale zu einem Ausgangssignal kombiniert werden, und wobei die Signalpfade von jeder Empfangsantenne (4, 6) zu dem Summiermittel (8) Verzögerungen (12, 14) beinhalten, um den Effekt von Interferenzen zwischen Signalen zu reduzieren, die an zwei oder mehr Empfangsantennen (4, 6) empfangen werden, und einen Mehrträgerempfänger (10), der mit dem Summiermittel (8) gekoppelt ist, um das Ausgangssignal zu empfangen, und einen Fehlerschutzdecoder zum Decodieren der ursprünglichen digitalen Daten beinhaltet.

2. Digitales Funkkommunikationssystem nach Anspruch 1, in dem es zwei oder mehr Empfangsantennen (4, 6) gibt und alle mit Ausnahme von einem der Signalpfade zu dem Summiermittel (8) ein Verzögerungsmittel (12, 14) beinhalten, so dass Signale von den Empfangsantennen (4, 6) das Summiermittel zu unterschiedlichen Zeiten erreichen.

3. Digitales Funkkommunikationssystem nach Anspruch 1 oder Anspruch 2, das wenigstens drei Empfangsantennen umfasst.

4. Digitales Funkkommunikationssystem nach einem der vorherigen Ansprüche, bei dem wenigstens zwei der Empfangsantennen nicht gleichzeitig Signale von den Sendern empfangen können und die Signalpfade von diesen Empfangsantennen zu dem Summiermittel um ähnliche Beträge verzögert werden.

5. Digitales Funkkommunikationssystem nach einem der vorherigen Ansprüche, bei dem der Sender die Aufgabe hat, ein COFDM-Signal zu senden.

6. Digitales Funkkommunikationssystem nach einem der vorherigen Ansprüche, bei dem es eine Mehrzahl von Sendern gibt, die jeweils Signale in unterschiedlichen Teilen des Frequenzbandes senden.

7. Digitales Funkkommunikationssystem nach Anspruch 1, bei dem die zu dem an jeder Antenne empfangenen Signal addierte Verzögerung einen Mindestwert hat, der mit der höchstmöglichen Pfaddifferenz zwischen beliebigen zwei der Empfangsantennen plus einer zusätzlichen Verzögerung äquivalent ist.

8. Digitales Funkkommunikationssystem nach Anspruch 5, bei dem der maximale mit einer der Antennen verwendete Verzögerungswert gleich oder kleiner als das Schutzintervall des verwendeten COFDM-Signals ist.

9. Digitales Funkkommunikationssystem nach Anspruch 7, bei dem keine zusätzliche Verzögerung mit einer der Antennen verwendet wird.

10. Digitales Funkkommunikationssystem nach einem der vorherigen Ansprüche, bei dem ein Verbindungsmittel zwischen den Empfangsantennen und den Summierpunkten auch die Aufgabe hat, die Verzögerungsfunktion auszuführen.

11. Digitales Funkkommunikationssystem nach einem der vorherigen Ansprüche, bei dem ferner Mittel vorgesehen sind, um das empfangene Signal an jeder Empfangsantenne in eine andere Funkfrequenz oder in eine Zwischenfrequenz oder in eine optische Frequenz umzuwandeln, um die Verzögerung mittels des geeigneten Verbindungsmittels zu implementieren, so dass das Verbindungsmittel kompakter oder die Signaldämpfung geringer ist.

12. Verfahren zum Betreiben eines digitalen Funkkommunikationssystems, umfassend einen mobilen Sender (2) zum Senden von fehlergeschützten digitalen Daten auf einer Mehrzahl von Funkträgern und eine Mehrzahl von Empfangsantennen (12, 14), wobei das Verfahren die folgenden Schritte umfasst: Senden von digitalen Signalen von dem Sender (2), Empfangen der Signale von den Empfangsantennen (12, 14), Anlegen der empfangenen Signale an ein Summiermittel (8), Verzögern der Signale zwischen den Empfangsantennen (12, 14) und dem Summiermittel (8), so dass die Effekte von Interferenzen zwischen Signalen reduziert werden, Erzeugen eines Ausgangssignal von dem Summiermittel (8), Empfangen des Ausgangssignals an einem Empfänger und Decodieren des Ausgangssignals zum Decodieren der ursprünglichen digitalen Daten.

**Revendications**

1. Système de communication radio numérique comprenant un émetteur-récepteur mobile (2) transmettant des données numériques protégées contre les erreurs sur une pluralité de porteuses radio à une pluralité d'antennes réceptrices (4, 6) destinées à recevoir des signaux depuis l'émetteur (2), les antennes réceptrices (4, 6) étant placées autour d'une zone dans laquelle l'émetteur (2) doit être utilisé, et un moyen de sommation (8) dans lequel les signaux reçus par les antennes réceptrices (4, 6) sont combinées pour fournir un signal de sortie, et dans lequel les trajets de signaux depuis chaque antenne réceptrice (4, 6) jusqu'au moyen de sommation (8) comportent des retards (12, 14) pour réduire l'effet du brouillage entre les signaux reçus sur deux ou plusieurs antennes réceptrices (4, 6), et un récepteur de porteuses multiples (10) couplé au moyen de sommation (8) pour recevoir le signal de sortie et comportant un décodeur de protection contre les erreurs pour décoder les données numériques d'origine.

2. Système de communication radio numérique selon la revendication 1, comportant deux ou plusieurs antennes réceptrices (4, 6) et dans lequel tous les trajets de signaux sauf un jusqu'au moyen de sommation (8) comportent un moyen de retard (12, 14) de telle sorte que les signaux provenant des antennes réceptrices (4, 6) atteignent le moyen de sommation à des moments différents.

3. Système de communication radio numérique selon la revendication 1 ou la revendication 2, comprenant au moins trois antennes réceptrices.

4. Système de communication radio numérique selon l'une quelconque des revendications précédentes, dans lequel au moins deux des antennes réceptrices ne peuvent pas recevoir simultanément des signaux depuis les émetteurs et les chemins de signaux depuis ces antennes réceptrices jusqu'au moyen de sommation sont retardés par des quantités semblables.

5. Système de communication radio numérique selon l'une quelconque des revendications précédentes, dans lequel l'émetteur est adapté pour un signal COFDM.

6. Système de communication radio numérique selon l'une quelconque des revendications précédentes, comportant une pluralité d'émetteurs, chacun émettant des signaux dans différentes parties de la bande de fréquences.

7. Système de communication radio numérique selon la revendication 1, dans lequel le retard ajouté au signal reçu à chaque antenne a une valeur minimale équivalente à la différence de trajet maximale possible entre n'importe quelles deux antennes des antennes réceptrices plus un retard supplémentaire.

8. Système de communication radio numérique selon la revendication 5, dans lequel la valeur de retard maximale utilisée avec un des antennes est inférieure ou égale à l'intervalle de garde du signal COFDM utilisé.

9. Système de communication radio numérique selon la revendication 7, dans lequel aucun retard supplémentaire n'est utilisé avec l'une des antennes.

10. Système de communication radio numérique selon l'une quelconque des revendications précédentes, dans lequel un moyen de connexion entre les antennes réceptrices et le point de sommation est aussi adapté pour effectuer la fonction de retard.

11. Système de communication radio numérique selon l'une quelconque des revendications précédentes, dans lequel d'autres moyens sont fournis, de telle sorte que le signal reçu à chaque antenne réceptrice soit converti en une fréquence radio différente ou en une fréquence intermédiaire ou en une fréquence optique, pour mettre en oeuvre le retard en utilisant le moyen de connexion approprié de telle sorte que le moyen de connexion soit plus compact ou que l'atténuation de signal soit plus faible.

12. Procédé d'exploitation d'un système de communication radio numérique comprenant un émetteur mobile (2) pour émettre des données numériques protégées contre les erreurs sur une pluralité de porteuses radio et une pluralité d'antennes réceptrices (12, 14), le procédé comprenant les étapes de transmission de signaux numériques depuis l'émetteur (2), réception des signaux depuis les antennes réceptrices (12, 14), fourniture des signaux reçus à un moyen de sommation (8), retard des signaux entre les antennes réceptrices (12, 14) et le moyen de sommation (8) de telle sorte que les effets du brouillage entre les signaux soient réduits, fourniture d'un signal de sortie depuis le moyen de sommation (8), réception du signal de sortie au niveau d'un récepteur et décodage du signal de sortie afin de décoder les données numériques d'origine.

receive
antenna 1

summed
output

COFDM
DECODER

radio-
camera

receive
antenna 2

+

Fig. 1. Receiving the signal at two sites and summing the two signals

power
dB

ensemble
of n carriers

B

frequency

Fig. 2. Original COFDM signal generated at mobile camera.

*Short delay multipath*

threshold level

most carriers
below threshold

**FIG. 3**

*Long delay multipath (using additional delay)*

threshold level

very few carriers
below threshold

**FIG. 4**

FIGURE 5

Fig. 6. An example DRUMS system

Fig. 7. Coincident flat fading at two antenna sites